Europäisches Patentamt

European Patent Office

Office européen des brevets

(19)

(11) Veröffentlichungsnummer: **0 057 808**
**B1**

(12) **EUROPÄISCHE PATENTSCHRIFT**

(45) Veröffentlichungstag der Patentschrift:
14.12.83

(51) Int. Cl.³: **F 16 C  33/24**

(21) Anmeldenummer: 81890213.2

(22) Anmeldetag: 30.12.81

(54) **Hochbelastbares Gleitlager.**

(30) Priorität: 06.02.81 AT 535/81

(43) Veröffentlichungstag der Anmeldung:
18.08.82 Patentblatt 82/33

(45) Bekanntmachung des Hinweises auf die Patenterteilung:
14.12.83 Patentblatt 83/50

(84) Benannte Vertragsstaaten:
CH DE FR GB IT LI SE

(56) Entgegenhaltungen:
DE - A - 1 629 414
DE - A - 2 251 637
FR - A - 797 483

(73) Patentinhaber: **Miba Gleitlager Aktiengesellschaft,
Hauptstrasse 3, A-4663 Laakirchen (AT)**

(72) Erfinder: **Ehrentraut, Otto, Sudetenplatz 1,
A-4810 Gmunden (AT)**

(74) Vertreter: **Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7, A-4020 Linz (AT)**

EP 0 057 808 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Hochbelastbares Gleitlager

Die Erfindung bezieht sich auf ein hochbelastbares Gleitlager, bestehend aus einer tragenden Stützschale und aus einer auf der Stützschale aufgebrachten Lagermetallschicht, die mit axialem Abstand voneinander angeordnete, mit der Laufrichtung höchstens einen Winkel von 15° einschliessende sich zumindest im wesentlichen über den Umfang erstreckende, nutenartige Ausnehmungen zur Aufnahme eines weicheren Lagerwerkstoffes aufweist.

An hochbelastbare Gleitlager müssen zum Teil einander widersprechende Forderungen gestellt werden, weil beispielsweise die für gute Notlaufeigenschaften erforderliche leichte plastische Verformbarkeit nicht zugleich eine hohe Dauerfestigkeit bei Betriebstemperatur ergeben kann. Um die Vorteile verschiedener Lagerwerkstoffe ausnützen zu können, ohne deren Nachteile in Kauf nehmen zu müssen, werden die hochbelastbaren Gleitlager im allgemeinen mehrschichtig aufgebaut, und zwar wird auf eine stählerne Stützschale eine Lagermetallschicht auf Aluminium- oder Kupferbasis aufgebracht, die eine weitere Schicht aus einem weicheren Lagerwerkstoff, beispielsweise aus einem Weissmetall oder aus Kunststoff, trägt. Die Laufflächenschicht wird dabei durch die härtere Lagermetallschicht gestützt, so dass die Nachteile der einzelnen Lagerwerkstoffe nicht voll zum Tragen kommen können. Trotzdem machen sich die jeweils nachteiligen Eigenschaften bemerkbar. Die Dauer- und Verschleissfestigkeit einer Lauffläche aus einem härteren Lagerwerkstoff kann durch eine weichere Laufflächenschicht niemals erreicht werden, auch wenn diese durch eine härtere Zwischenschicht gestützt wird.

Um die Reibungsverhältnisse unter gleichzeitiger Erhöhung der Verschleissfestigkeit zu verbessern, wurde bereits vorgeschlagen (DE-A-22 51 637), die Lauffläche nicht als durchgehende Schicht eines einzigen Lagerwerkstoffes auszubilden, sondern in eine Schicht eines härteren Lagermetalles einen weicheren Lagerwerkstoff einzubetten, so dass sich in Laufrichtung abwechselnd Zonen eines härteren und eines weicheren Lagerwerkstoffes ergeben. Dabei wurde von der Vorstellung ausgegangen, dass das härtere Lagermetall gewissermassen ein tragendes Gerüst bildet, das eine übermässige Übertragung des weicheren Lagerwerkstoffes auf die Reibungsflächen verhindert, wobei die vorragenden Stege des tragenden Gerüstes aufgrund ihrer Erstreckung quer zur Laufrichtung mit dem weicheren Lagerwerkstoff dünnschichtig überzogen werden können. Derartige Gleitlager können jedoch die in sie gesetzten Erwartungen nicht erfüllen, und zwar unabhängig davon, ob der vorzugsweise aus einem selbstschmierenden Kunststoff bestehende weichere Lagerwerkstoff in axialen Nuten oder in schraubenförmig verlaufenden Nuten des härteren Lagerwerkstoffes eingebettet wird. Erstaunlicherweise konnte nämlich die Verreibungsgefahr nicht wesentlich herabgesetzt werden.

Bei einem anderen bekannten Gleitlager dieser Art (FR-A-797 483) sind die schraubenförmig verlaufenden Nuten zur Aufnahme des weicheren Lagerwerkstoffes nicht im wesentlichen quer zur Laufrichtung, sondern unter einem spitzen Winkel dazu angeordnet, wodurch sich zwischen der Laufrichtung und der Übergangszone vom weicheren zum härteren Lagerwerkstoff schleifende Schnitte ergeben. Aus diesem Grunde können feste Fremdkörper in der Übergangszone vom weicheren zum härteren Werkstoff nur in einem bedeutend geringeren Ausmass aus dem weicheren Werkstoff heraus in den härteren eingedrückt werden, so dass diese Fremdkörper weitgehend im weicheren Werkstoff eingebettet bleiben und keine Störstellen bilden, die örtliche Überlastungen verursachen könnten. Trotzdem ist die Belastbarkeit dieser bekannten Gleitlager vergleichsweise gering.

Der Erfindung liegt somit die Aufgabe zugrunde, die angeführten Mängel der bekannten Gleitlager zu vermeiden und ein hochbelastbares Gleitlager zu schaffen, das die Vorteile der weicheren und härteren Lagerwerkstoffe in sich vereinigt, ohne die jeweiligen Nachteile dieser Werkstoffe aufzuweisen.

Ausgehend von einem Gleitlager der eingangs geschilderten Art löst die Erfindung die gestellte Aufgabe dadurch, dass der von Ausnehmungsmitte zu Ausnehmungsmitte gemessene Axialabstand der nutenartigen Ausnehmungen bis zu einem Höchstwert von 10 mm kleiner oder gleich einem oberen Grenzwert

$$a_o = 250 + 0,5d + 0,01\ d^2$$

ist, der sich beim Einsetzen des jeweiligen in Millimeter gemessenen Lagerdurchmessers d in Mikrometer ergibt.

Überraschenderweise hat sich herausgestellt, dass bei der Erfüllung dieser Bedingung allen Anforderungen an ein hochbelastbares Gleitlager vorteilhaft entsprochen werden kann. Entscheidend ist nämlich, dass für die Bereiche einer örtlichen Überbeanspruchung nicht nur die Eigenschaften eines der beiden Werkstoffe wirksam werden, sondern auch im örtlichen Bereich ein Kombinationseffekt gewährleistet wird. Es muss also für eine entsprechend feine Verteilung des weicheren Lagerwerkstoffes über die Lauffläche gesorgt werden. Diese Verteilung, die durch den Abstand der nutenartigen Ausnehmungen bestimmt ist, ist von der Grösse des tragenden Bereiches und daher vom Lagerdurchmesser abhängig. Der angegebene obere Grenzwert $a_o$ stellt eine ausreichende Verteilung sicher, wobei allerdings der Ausnehmungsabstand auch für Lager grösseren Durchmessers nicht 10 mm überschreiten soll.

Da es auf einen Kombinationseffekt des weicheren und des härteren Lagerwerkstoffes ankommt und dieser von der Verteilung der Lagerwerkstoffe über die Lauffläche abhängt, können die Ergebnisse durch eine feinere Verteilung verbessert werden. Besonders günstige Verhältnisse werden dabei erhalten, wenn der Axialabstand der Ausnehmungen kleiner als ein oberer Grenzwert

$$a_o = 200 + 0,3d + 0,001 d^2$$

ist, der sich beim Einsetzen des in Millimeter gemessenen Lagerdurchmessers d in Mikrometer ergibt.

Der axiale Abstand der nutenartigen Ausnehmungen sollte auch nach unten begrenzt sein, und zwar nicht nur aus Herstellungsgründen, sondern auch wegen des bei einer vorteilhaften Querschnittsform der Ausnehmungen zur Verfügung stehenden Volumens an weicherem Lagerwerkstoff. Ist der Axialabstand der Ausnehmungen grösser oder gleich einem unteren Grenzwert

$$a_u = 25 + 0,1 d,$$

der sich in Mikrometer beim Einsetzen des in Millimeter gemessenen Lagerdurchmessers d ergibt, so kann allen diesbezüglichen Anforderungen in vorteilhafter Weise entsprochen werden.

Wie bereits ausgeführt wurde, hängt die Gefahr von Einbettungen harter Fremdkörper im härteren Lagerwerkstoff von der Neigung der nutenartigen Ausnehmungen gegenüber der Laufrichtung ab. Berägt der Winkel zwischen den nutenartigen Ausnehmungen und der Laufrichtung höchstens 3°, so kann diese Gefahr praktisch ausgeschlossen werden. Ausserdem ist diese Bedingung einfach einzuhalten, weil bei dem erforderlichen Axialabstand eine schraubenförmige Anordnung der Ausnehmungen die gewünschten kleinen Winkel von selbst ergibt, zumindest bei eingängiger Schraubenform. Mit den kleinen Neigungswinkeln der Ausnehmungen gegenüber der Laufrichtung kann zusätzlich vermieden werden, dass in den Übergangszonen zwischen dem härteren und weicheren Lagerwerkstoff der hydrodynamische Schmierfilm durch quer zur Laufrichtung verlaufende Grenzzonen gestört wird.

Wegen der auftretenden Belastungen und der gewünschten Festigkeit sollte nicht nur eine bestimmte Verteilung des weicheren Lagerwerkstoffes über die Lauffläche eingehalten werden, sondern auch ein grundsätzliches Massverhältnis hinsichtlich des Ausnehmungsquerschnittes. Dieses Massverhältnis kann einfach durch das Verhältnis der Ausnehmungstiefe t zum Axialabstand a der Ausnehmungen angegeben werden. Dieses Verhältnis soll den oberen Grenzwert 0,5 (1500 – d)/1500 nicht überschreiten und ein Fünftel dieses Wertes nicht unterschreiten, wobei d dem in Millimeter gemessenen Zahlenwert des Lagerdurchmessers entspricht. Wie sich in der Praxis gezeigt hat, werden mit einem oberen Grenzwert 0,2 (1500 – d)/1500 besonders vorteilhafte Ausbildungen sichergestellt. Unabhängig vom gewählten Lagerdurchmesser sollte dieses Verhältnis aber nicht kleiner als 0,03 gewählt werden.

Anhand der Zeichnung wird der Erfindungsgegenstand näher erläutert. Es zeigen

Fig. 1 einen Querschnitt durch ein erfindungsgemässes Gleitlager in einem vergrösserten Massstab,

Fig. 2 eine Draufsicht auf die Abwicklung der Lauffläche des Gleitlagers nach Fig. 1, die

Fig. 3 bis 5 verschiedene Querschnittsformen der mit einem weicheren Lagerwerkstoff ausgefüllten, nutenartigen Ausnehmungen in einem grösseren Massstab, die

Fig. 6 und 7 jeweils ein Diagramm, das die durchschnittlichen Ausfälle von Gleitlagern mit einer Laufschicht aus einem weicheren Lagerwerkstoff bzw. einer Laufschicht aus einem härteren Lagerwerkstoff mit den Ausfällen eines erfindungsgemässen Gleitlagers unter einer Belastung mit einer Altölschmierung vergleicht und

Fig. 8 ein Diagramm, das den unterschiedlichen Abtrag der Laufschicht bei einem Lager mit einer Laufschicht aus einem harten Lagerwerkstoff, bei einem Lager mit einer Laufschicht aus einem harten Lagerwerkstoff und bei einem erfindungsgemässen Gleitlager mit zunehmender Laufzeit veranschaulicht.

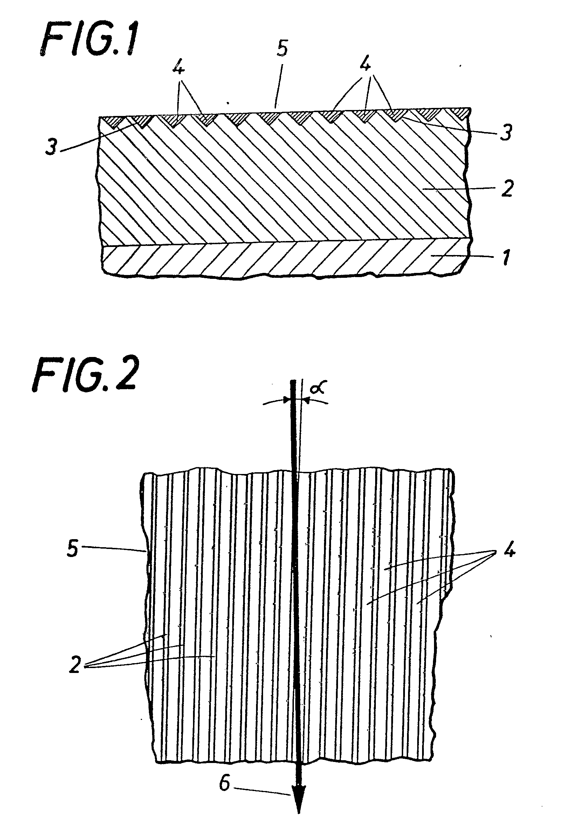

Gemäss den Fig. 1 und 2 besteht das dargestellte Gleitlager aus einer stählernen Stützschale 1, auf der eine Lagermetallschicht 2 auf Aluminium- oder Kupferbasis aufgebracht ist. Diese Lagermetallschicht 2 weist nutenartige Ausnehmungen 3 auf, die mit einem weicheren Lagerwerkstoff 4 ausgefüllt sind, beispielsweise mit einer Weissmetallegierung oder mit Kunststoff. Wie der Fig. 2 entnommen werden kann, verlaufen die Ausnehmungen 3 in der Lauffläche 5 schraubenlinienförmig, wobei jedoch der Neigungswinkel $\alpha$ der Ausnehmungen 3 gegenüber der Laufrichtung 6, der vorzugsweise kleiner als 3° gewählt wird, einen Höchstwert von 15° nicht übersteigen darf. Selbstverständlich können die Ausnehmungen 3 auch durch in sich geschlossene Ringnuten gebildet werden.

Von entscheidender Bedeutung für die Belastbarkeit des Gleitlagers ist die Verteilung des weicheren Lagerwerkstoffes 4 über die Lauffläche. Diese Verteilung kann durch den von Ausnehmungsmitte zu Ausnehmungsmitte gemessenen, axialen Abstand a der nutenartigen Ausnehmungen 3 angegeben werden. Dieser axiale Abstand a ist vom jeweiligen Lagerdurchmesser d abhängig. Selbstverständlich spielt auch der Anteil des weicheren Lagerwerkstoffes 4 an der Lauffläche 5 eine Rolle, wobei im allgemeinen der Laufflächenanteil des weicheren Lagerwerkstoffes 4 mindestens die halbe Lauffläche 5 ausmachen soll. Für besondere Zwecke ist aber auch unter günstigen Werkstoffkombinationen ein geringerer Flächenanteil des weicheren Lagerwerkstoffes an der Lauffläche möglich, wobei sehr feine Verteilungen anzustreben sein werden.

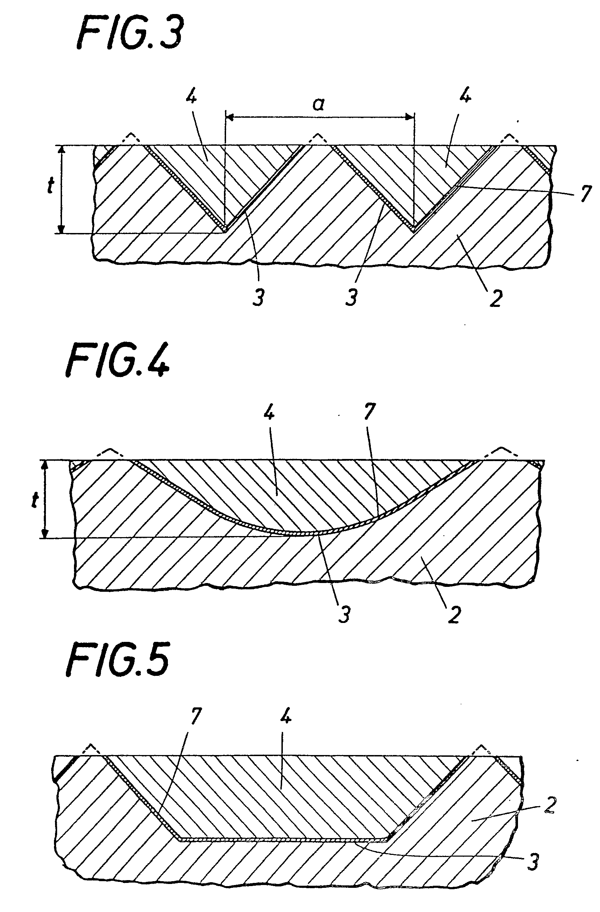

Wie die Beispiele in den Fig. 3–5 zeigen, können an sich sehr unterschiedliche Querschnittsformen für die nutenartigen Ausnehmungen gewählt werden. Entscheidend für die Querschnittsform ist, dass das Verhältnis zwischen der Ausnehmungstiefe t und dem Abstand a der Ausnehmungen innerhalb bestimmter, ebenfalls vom Durchmesser d abhängiger Grenzen liegt. Durch das Einhalten solcher Grenzen wird in besonders vorteilhafter Weise sichergestellt, dass auch in einem örtlichen Belastungsbereich die einzelnen Lagerwerkstoffe nicht für sich, sondern in einer Kombination wirksam werden, die die Nachteile des jeweiligen Einzelwerkstoffes nicht aufweist. Der Lagerverschleiss wird daher im wesentlichen von den Eigenschaften der härteren Lagermetallschicht 2 bestimmt. Die Stützwirkung der verbleibenden Stege der Schicht 2 zwischen den Ausnehmungen 3 verhindert eine grossflächigere, den Gleitraum störende plastische Verformung des weichen Oberflächenanteiles 4, wobei wegen des besonderen Ausnehmungsverlaufes die Fremdkörper im Übergangsbereich zwischen dem weicheren Lagerwerkstoff 4 und der Lagermetallschicht 2 nicht in den härteren Lagerwerkstoff eingedrückt und dort störend abgelagert werden können. Fremdkörper werden im Gegenteil von den Stegen des härteren Lagerwerkstoffes in den Bereich des weicheren Lagerwerkstoffes abgedrängt und von dem weicheren Lagerwerkstoff in nicht störender Weise aufgenommen. Die Fremdkörper können folglich die Reibung nur in einem wesentlich geringeren Masse beeinflussen.

Die Stützfunktion des härteren Lagerwerkstoffes bringt eine relative Entlastung des weicheren Lagerwerkstoffes bei dessen Verformung mit sich, was eine Erhöhung der Dauerfestigkeit und der Verschleissfestigkeit zur Folge hat. Ausserdem kann über die Formgebung der Ausnehmungen 3 und deren Abmessungsverhältnisse die plastische Verformbarkeit des weicheren Lagerwerkstoffes unterstützt werden, wodurch die Anpassungsfähigkeit an Geometrieabweichungen erhöht wird.

Da es durchaus üblich ist, zwischen einem weicheren Lagerwerkstoff und einem härteren Lagermetall eine Sperrschicht, beispielsweise auf Nickelbasis, vorzusehen, braucht wohl nicht auf das Vorhandensein einer solchen Sperrschicht 7 verwiesen zu werden.

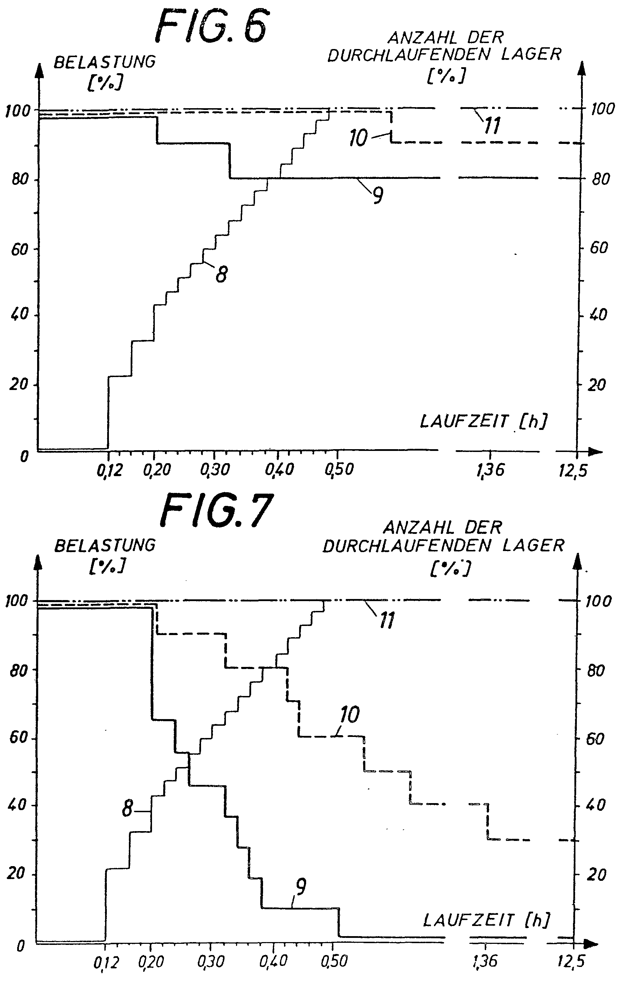

Um die Wirksamkeit der erfindungsgemässen Massnahmen deutlich zu machen, wurde in den Fig. 6 und 7 die Empfindlichkeit bekannter Lager gegenüber Verunreinigungen der Schmutzempfindlichkeit eines erfindungsgemässen Gleitlagers gegenübergestellt. Zu diesem Zweck wurde auf der Abszisse die Laufzeit der Lager in Stunden aufgetragen, wobei die Belastung schrittweise von Null auf einen Höchstwert gesteigert wurde. Anhand der Kurve 8 ist die prozentuelle Belastung der Lager auf der linken Ordinate abzulesen, wobei die volle Belastung Betriebsbedingungen entspricht, wie sie bei Hochleistungs-Verbrennungskraftmaschinen auftreten. Aus der voll ausgezogenen Linie 9 kann abgeleitet werden, dass bei einem Gleitlager mit einer Gleitlagerschicht aus einer Aluminium-Zinn-Legierung ohne weichere Laufschicht bereits vor dem Aufbringen der Vollast 20 von 100 Lagern ausfallen. Trägt ein solches Gleitlager eine weichere Laufschicht, beispielsweise aus einem Weissmetall, so fallen nur 10 von 100 Lagern aus, und zwar erst nach dem Erreichen der Vollast. Die strichliert gezeichnete Kurve 10 zeigt diesen Sachverhalt deutlich. Mit der strichpunktiert angedeuteten Linie 11 wird gezeigt, dass bei sonst gleichen Verhältnissen kein Lagerausfall bei erfindungsgemässen Lagern festgestellt werden kann. Dieses vorteilhafte Verhalten des erfindungsgemässen Gleitlagers auch gegenüber einem Gleitlager mit einer durchgehenden Laufschicht aus einem weichen Lagerwerkstoff lässt sich durch den wesentlich geringeren Verschleiss erklären, der beim Lager mit der durchgehenden Laufschicht aus einem weichen Lagerwerkstoff bald Bedingungen schafft, wie sie sonst bei einem gut angepassten Gleitlager mit einer Laufschicht aus einem harten Lagerwerkstoff auftreten, so dass die Vorteile des weichen Lagerwerkstoffes nach einer bestimmten Betriebszeit kaum mehr ausgenützt werden können, weil der weiche Lagerwerkstoff weitgehend abgetragen ist.

Die Darstellung nach Fig. 7 zeigt diese Verhältnisse noch deutlicher, weil die geprüften Lager eine Lagermetallschicht aus einer noch härteren Blei-Bronze-Legierung aufwiesen, deren Schmutzempfindlichkeit entsprechend höher ist. Die Kurve 9 zeigt, dass kurz nach dem Erreichen der vollen Belastung alle Lager mit einer durchgehenden Laufschicht aus dem harten Lagermetall ausfielen. Von den eingesetzten Lagern mit einer durchgehenden Laufschicht aus einem weichen Lagerwerkstoff fielen nur 30% nicht aus, wie dies die Linie 10 zeigt. Die Überlegenheit des erfindungsgemässen Gleitlagers wird durch die Linie 11 in diesem Versuch besonders deutlich.

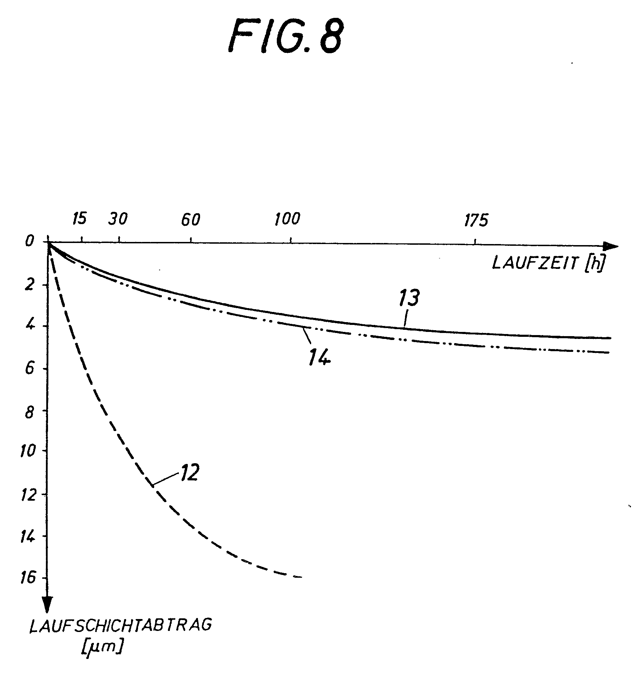

Der Verschleiss der verschiedenen Lagerkonstruktionen kann mit Hilfe des Diagrammes nach Fig. 8 gut veranschaulicht werden. In diesem Diagramm ist auf der Ordinate der Abtrag der Laufschicht in Mikrometer aufgetragen. An der Abszisse ist die Laufzeit in Stunden abzulesen. Aus der Kurve 12, die einem Gleitlager mit einer Laufschicht aus einem weichen Lagerwerkstoff entspricht, ersieht man, dass der Werkstoffabtrag und damit der Verschleiss die Lebensdauer solcher Lager stark begrenzt. Erwartungsgemäss sind die Ergebnisse bei Lagern mit einer durchgehenen Laufschicht aus einem harten Lagermetall wesentlich günstiger. Die voll ausgezogene Linie 13 zeigt einen wesentlich flacheren Verlauf, was durch den vergleichsweise geringen Verschleiss bedingt ist. Diesem geringen Verschleiss gegenüber fallen erfindungsgemässe Gleitlager kaum ab, wie dies die Kurve 14 beweist, die für ein erfindungsgemässes Gleitlager kaum schlechtere Verschleissverhältnisse als bei einem Lager mit einer durchgehenden Laufschicht aus einem harten Lagerwerkstoff anzeigt. Trotz dieser fast gleichen Verschleissfestigkeit treten, wie das die Fig. 6 und 7 beweisen, keine der sonst mit der hohen Verschleissfestigkeit verbundenen Nachteile auf.

Es zeigt sich somit, dass bei den erfindungsgemässen Gleitlagern sogar Lagerwerkstoffe eingesetzt werden können, die aufgrund ihrer hohen Festigkeit und Härte sonst für diesen Zweck ungeeignet sind.

Obwohl die erfindungsgemässen Gleitlager vor allem als zylindrische Lager Verwendung finden, kann der Erfindungsgedanke selbstverständlich auch bei Stirnlagern angewandt werden. Die Abstände der Ausnehmungen sind in einem solchen Fall natürlich nicht axial, sondern radial gerichtet, wobei unter der Laufrichtung die jeweilige Tangente zu verstehen ist. Der Lagerdurchmesser d entspricht dem mittleren Durchmesser der Lauffläche.

**Patentansprüche**

1. Hochbelastbares Gleitlager, bestehend aus einer tragenden Stützschale (1) und aus einer auf der Stützschale (1) aufgebrachten Lagermetallschicht (2), die mit axialem Abstand (a) voneinander angeordnete, mit der Laufrichtung (6) höchstens einen Winkel ($\alpha$) von 15° einschliessende, sich zumindest im wesentlichen über den Umfang erstreckende, nutenartige Ausnehmungen (3) zur Aufnahme eines weicheren Lagerwerkstoffes (4) aufweist, dadurch gekennzeichnet, dass der von Ausnehmungsmitte zu Ausnehmungsmitte gemessene Axialabstand (a) der nutenartigen Ausnehmungen (3) bis zu einem Höchstwert von 10 mm kleiner oder gleich einem oberen Grenzwert

$$a_o = 250 + 0,5\,d + 0,01\,d^2$$

ist, der sich beim Einsetzen des jeweiligen in Millimeter gemessenen Lagerdurchmessers d in Mikrometer ergibt.

2. Gleitlager nach Anspruch 1, dadurch gekennzeichnet, dass der Axialabstand (a) der Ausnehmungen (3) kleiner als ein oberer Grenzwert

$$a_o = 200 + 0,3\,d + 0,001\,d^2$$

ist, der sich beim Einsetzen des in Millimeter gemessenen Lagerdurchmessers d in Mikrometer ergibt.

3. Gleitlager nach Anspruch 1 oder 2, dadurch gekennzeichnet, dass der Axialabstand (a) der Ausnehmungen (3) grösser oder gleich einem unteren Grenzwert

$$a_u = 25 + 0,1\,d$$

ist, der sich in Mikrometer beim Einsetzen des in Millimeter gemessenen Lagerdurchmessers d ergibt.

4. Gleitlager nach einem der Ansprüche 1 bis 3, dadurch gekennzeichnet, dass der Winkel ($\alpha$)

zwischen den nutenartigen Ausnehmungen (3) und der Laufrichtung (6) höchstens 3° beträgt.

5. Gleitlager nach einem der Ansprüche 1 bis 4, dadurch gekennzeichent, dass bis zu einem Mindestwert von 0,03 das Verhältnis der Ausnehmungstiefe (t) zum Aixalabstand (a) der Ausnehmungen (3)

$$\frac{t}{a} \leqslant 0,5\,\frac{1500 - d}{1500}$$

ist, wobei d dem in Millimeter gemessenen Zahlenwert des Lagerdurchmessers d entspricht.

6. Gleitlager nach Anspruch 5, dadurch gekennzeichnet, dass die untere Grenze für das Verhältnis der Ausnehmungstiefe (t) zum Axialabstand (a) bei einem vorgegebenen Minimum von 0,03 etwa einem Fünftel der oberen Grenze entspricht.

7. Gleitlager nach Anspruch 5 oder 6, dadurch gekennzeichnet, dass bis zu einem Mindestwert von 0,03 das Verhältnis der Ausnehmungstiefe (t) zum Axialabstand (a) der Ausnehmungen (3)

$$\frac{t}{a} \leqslant 0,2\,\frac{1500 - d}{1500}$$

ist, wobei d dem in Millimeter gemessenen Zahlenwert des Lagerdurchmessers d entspricht.

**Claims**

1. A high-duty sliding surface bearing consisting of a carrying supporting shell (1) and a bearing metal layer (2), which is applied to the supporting shell (1) and comprises axially spaced apart (1), groovelike recesses (3), which include an angle ($\alpha$) of at most 15 degrees with the direction of movement (6) and extend at least substantially throughout the circumference and serve to receive a softer bearing material (4), characterized in that the axial spacing (a) of the groovelike recesses (3), measured from the centre of one recess to the centre of another, is up to a maximum of 10 mm smaller than or equal to an upper limit

$$a_o = 250 + 0.5\,d + 0.01\,d^2$$

in micrometres, if d is the diameter of the bearing in millimetres.

2. A sliding surface bearing according to claim 1, characterized in that the axial spacing (a) of the recesses is smaller than an upper limit

$$a_o = 200 + 0.3\,d + 0.001\,d^2$$

in micrometres if d is the diameter of the bearing in millimetres.

3. A sliding surface bearing according to claim 1 or 2, characterized in that the axial spacing (a) of the recess (3) is larger than or equal to a lower limit

$a_u = 25 + 0.1\,d$

in micrometres if d is the diameter of the bearing in millimetres.

4. A sliding surface bearing according to any of claims 1 to 3, characterized in that the angle ($\alpha$) between the groovelike recesses (3) and the direction of movement (6) is at most 3 degrees.

5. A sliding surface bearing according to any of claims 1 to 4, characterized in that down to a minimum of 0.03 the ratio of the depth (t) of the recesses to the axial spacing (a) of the recesses (3) equals

$$\frac{t}{a} \leq 0.5\,\frac{1500 - d}{1500}$$

if d is the diameter of the bearing in millimetres.

6. A sliding surface bearing according to claim 5, characterized in that the lower limit of the ratio of the depth (t) of the recesses to the axial spacing (a) equals about one-fifth of the upper limit, down to a predetermined minimum of 0.03.

7. A sliding surface bearing according to claim 5 or 6, characterized in that down to a minimum of 0.03 the ratio of the depth (t) of the recesses to the axial spacing (a) of the recesses (3) equals

$$\frac{t}{a} \leq 0.2\,\frac{1500 - d}{1500}$$

if d is the diameter of the bearing in millimetres.

**Revendications**

1. Coussinet pour charges élevées, composé d'une coquille (1) d'appui portante et d'une couche (2) de métal antifriction qui, appliquée sur la coquille (1) d'appui, présente des évidements (3) qui sont prévus à la manière de rainures pour recevoir un matériau anti-friction plus malléable à une distance axiale (a) l'un de l'autre en s'étendant au moins essentiellement sur la périphérie en faisant avec le sens du roulement (6) un angle ($\alpha$) de 15° au plus, caractérisé par le fait que la distance axiale (a) des évidements (3) en forme de rainures, mesurée du milieu d'un évidement au milieu d'un autre évidement, est, jusqu'à une valeur maximale de 10 mm, inférieure ou égale à une valeur-limite supérieure

$a_o = 250 + 0,5\,d + 0,01\,d^2$

qui est le résultat, exprimé en micromètres, de l'introduction du diamètre «d» du coussinet mesuré dans chaque cas d'espèce en millimètres.

2. Coussinet selon la revendication 1, caractérisé par le fait que la distance axiale (a) des évidements (3) est inférieure à une valeur-limite supérieure égale à

$a_o = 200 + 0,3\,d + 0,001\,d^2$

qui est le résultat, exprimé en micromètres, de l'introduction du diamètre «d» du coussinet, mesuré en millimètres.

3. Coussinet selon les revendications 1 et 2, caractérisé par le fait que la distance axiale (a) des évidements (3) est supérieure ou égale à une valeur-limite inférieure

$a_u = 25 + 0,1\,d$

qui est le résultat, exprimé en micromètres, de l'introduction du diamètre «d» du coussinet, mesuré en millimètres.

4. Coussinet selon l'une des revendications 1 à 3, caractérisé par le fait que l'angle ($\alpha$) entre les évidements (3) en forme de rainures et le sens du roulement (6) est au plus égal à 3°.

5. Coussinet selon l'une des revendications 1 à 4, caractérisé par le fait que, jusqu'à une valeur minimale de 0,03, le rapport t/a entre la profondeur (t) d'évidement et la distance axiale (a) des évidements (3), est égal ou inférieur à

$$0,5 \cdot \frac{1500 - d}{1500}$$

où d correspond à la valeur numérique, mesurée en millimètres, du diamètre «d» du coussinet.

6. Coussinet selon la revendication 5, caractérisé par le fait que la limite inférieure du rapport t/a entre la profondeur (t) d'évidement et la distance axiale (a) correspond, pour un minimum prescrit de 0,03, à peu près à un cinquième de la limite supérieure.

7. Coussinet selon la revendication 5 ou 6, caractérisé par le fait que, jusqu'à une valeur minimale de 0,03, le rapport t/a entre la profondeur (t) d'évidement et la distance axiale (a) des évidements (3) est inférieur ou égale à

$$0,2 \cdot \frac{1500 - d}{1500}$$

où d correspond a la valeur numérique, mesurée en millimètres, du diamètre «d» du coussinet.

**FIG.1**

**FIG.2**

*FIG.3*

*FIG.4*

*FIG.5*

## FIG. 6

BELASTUNG [%]

ANZAHL DER DURCHLAUFENDEN LAGER [%]

LAUFZEIT [h]

## FIG. 7

BELASTUNG [%]

ANZAHL DER DURCHLAUFENDEN LAGER [%]

LAUFZEIT [h]

# FIG.8